# EUROPEAN PATENT SPECIFICATION

(11) **EP 2 877 728 B1**
(45) Date of publication and mention of the grant of the patent: **26.10.2016**
(21) Application number: 13739802.0
(22) Date of filing: 04.06.2013
(51) Int. Cl.: F02D 19/06, F02D 19/08, F02D 19/10, F02P 19/02, F02P 19/00, F02D 41/00

(54) **SYSTEM FOR SUPPLYING AN INTERNAL COMBUSTION ENGINE**
ZUFUHRSYSTEM FÜR EINEN VERBRENNUNGSMOTOR
SYSTÈME D'ALIMENTATION D'UN MOTEUR À COMBUSTION INTERNE

(30) Priority: 04.06.2012 IT BO20120303
(43) Date of publication of application: 03.06.2015
(73) Proprietor: Brum S.r.l., 20121 Milano (IT)
(72) Inventor: CIACCINI, Marco, I-06019 Umbertide (Perugia) (IT)
(74) Representative: Dall'Olio, Christian
(86) International application number: PCT/IB2013/054600
(87) International publication number: WO 2013/182992

(56) References cited:
- EP-A1- 1 460 250
- WO-A1-2010/139572
- US-B1- 6 276 334

## Description

### FIELD OF INVENTION

As is known, a diesel engine comprises a series of injectors, associated to corresponding cylinders, able to inject diesel internally thereof.

In latest-generation diesel engines, electro-injectors are used, commanded and controlled by an electronic control board; the control board, in accordance with various parameters (such as for example the number of engine revolutions, temperature and pressure of the diesel, temperature of the coolant liquid in the radiator, position of the accelerator pedal, etc.) requires introduction of a predetermined quantity of diesel internally of the cylinders.

### DESCRIPTION OF THE PRIOR ART

Double-supply engines are known (see WO 2010/139572, US 2003/0187565), known as dual-fuel engines, in which the cylinders of a diesel engine are supplied with only diesel or, alternatively, with a mixture of diesel and gas.

US6276334 describes and engine running on both diesel and spark ignition.

The duel fuel supply actuated using electro-injectors involves interventions on the control board software, to which suitable electric signals have to be sent to mask the reduction of injected diesel, the reduction being compensated by introduction of gas-phase fuel into the cylinders.

### SUMMARY OF THE INVENTION

The aim of the invention is to provide a system for supplying an engine, structured originally so as to function according to the diesel cycle, which can be supplied alternatively with a fuel requiring ignition by compression (Diesel cycle) or with a gas the ignition of which is caused by the electrical arc of a sparking plug (Otto cycle).

A further aim of the invention is to provide a system which enables, with certainty and reliably, switching between the two types of supply, for example the first using diesel oil and the second using methane or liquid petroleum gas (LPG).

The aims are attained in accordance with the contents of the claims.

### BRIEF DESCRIPTION OF THE DRAWINGS

The characteristics of the invention are set out in the following with reference to the accompanying tables of drawings, in which:
- figure 1 illustrates a possible diagram of the proposed system;
- figure 2 illustrates, in detail and in section, detail K of figure 1;
- figures 3A, 3B illustrate details X and Y of figure 2, relating respectively to the start-up of the engine functioning with the Diesel cycle and the functioning of the same engine functioning with the Otto cycle.

### DESCRIPTION OF PREFERRED EMBODIMENTS

With reference to the figures of the drawings, 100 denotes a first supply plant of a latest-generation diesel engine, of known type, using the system known as "common rail".

Reference numeral 1 denotes the diesel tank in which a first conduit 2 (illustrated with a bold unbroken line) collects the diesel and opens into the distribution chamber 50, known as a rail.

Starting from the tank 1, the following, in a known way, are comprised in the conduit : a filter 3; a supply pump P₁; a flow regulator 4; and a high-pressure pump P₂.

A second conduit 8, which opens into the tank 1, branches from the conduit 50, with an interposing of a pressure limiter 7.

The rail 50 supplies a series of electro-injectors 9, in the following denoted briefly as injectors; for the sake of simplicity, the accompanying drawing includes a single injector, but the injectors supplied could be the totality of those included in the engine M, the engine being illustrated schematically.

As known, an injector is provided with a discharge channel 9A which conveys the diesel not injected internally of the cylinder externally of the cylinder; this channel is connected to the second conduit 8.

An electrical device 10, in which two configurations are possible, is inserted into the head of each cylinder of the engine M.

In a first configuration, the device 10 functions as a glowplug which, as is known, is activated on start-up of the engine (for example slightly before the start-up) for a predetermined time (for example a few seconds) with the aim of facilitating start-up of the engine.

In the second configuration the device 10 functions as the well-known sparkplug used in engines functioning according to the Otto cycle; the conformation of the device will be explained in the following.

The plant 100 is managed and controlled by a first control board 150 which uses a series of devices and sensors, functionally connected to the board 150, and described in the following.

The flow regulator 4 is constituted, for example, by a solenoid valve, connected to the control board, which enables or intercepts the flow of diesel towards the second pump P₂.

A sensor 11, located upstream of the second pump, detects the temperature of the diesel; further sensors 12, 13 are included, to measure respectively the diesel pressure in the rail 50 and the velocity of the drive shaft of the engine M.

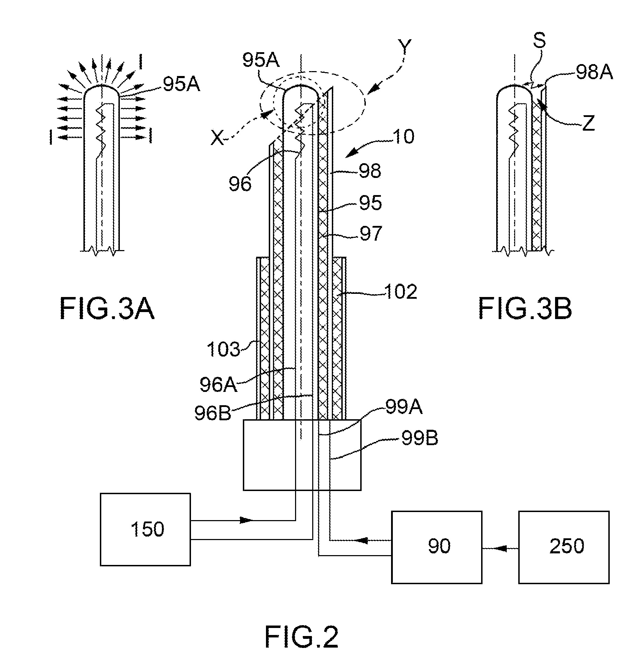

The sensors, 11, 12, 13, as well as the pressure limiter 7, are connected to the control board 150; the control board 150 further commands the electro-injector 9 and sets the configuration of the device 10 defining the glowplug: see figure 3A.

The control board 150 receives the data supplied by other sensors S₁, S₂, ... Sₙ, which detect, for example, the position of the accelerator pedal, the pressure exerted thereon, the temperature of the radiator coolant fluid, etc.

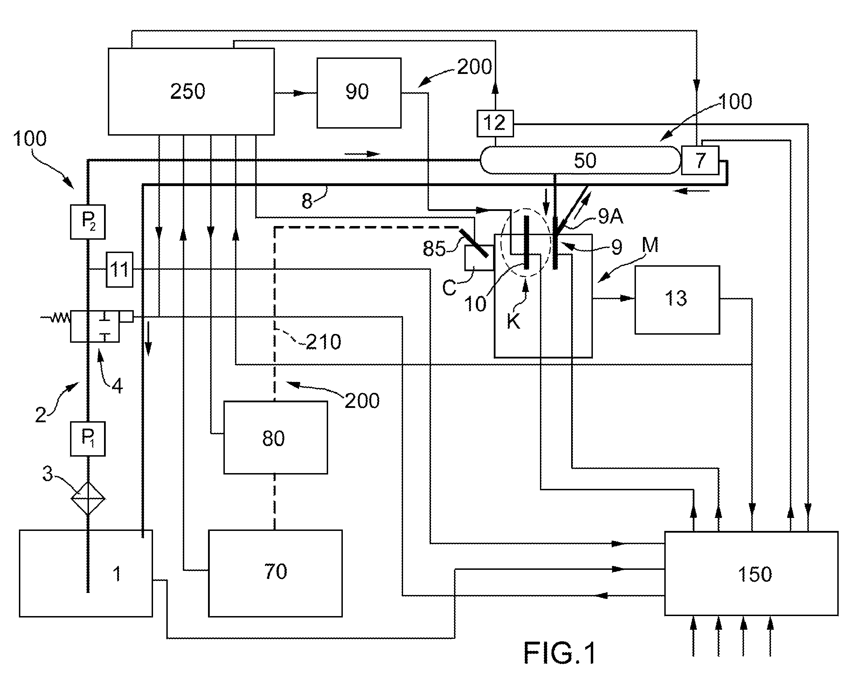

In figure 1, 200 denotes a second plant for supplying the cylinders of the engine M with gas (for example liquefied petroleum gas, known as LPG, methane, etc.).

The plant 200 comprises a second tank 70 containing the gas in the liquid state, which, in a known way, supplies a vaporizer 80; the vaporizer 80, by means of a channelling of supply 210, supplies gas injectors 85 inserted in the manifold C of the motor M, i.e. the manifold which supplies the aspirating valves of the cylinders of the motor M.

The plant 200 comprises a second control board 250 to which the parameters relating to the second tank 70 are sent (for example pressure, degree of filling, temperature); the second control board is able to intervene on means and/or devices of the first plant 100, more precisely the flow regulator 4 and the pressure regulator 7; further, the pressure measurement internally of the rail 50 is also sent via the sensor 12 to the control board.

The second control board 250 further controls and commands the vaporizer 80 and a tension pulse generator 90 destined to supply the second configuration of the device 10, i.e. the configuration functioning as an electrical ignition spark plug.

The device 10 (see figure 2) comprises a sort of bulb 90, constituted by the conductor material, internally of which, in proximity of the head 95A, an electrical resistance 96 is located which, by means of conductors 96A, is commanded by the first control board 150.

If the resistance 96 is supplied, the heat produced thereby is transmitted to the walls of the head 95A of the bulb and radiated thereby towards the outside: see the arrows I of figure 3A.

The bulb 95 is wound adheringly by an insulating sleeve 97 in turn wound adheringly by a tubular conductor electrode 98 (for example made of metal); the portions of the sleeve 97 and the electrode 98 adjacent to the head 95A of the bulb are cut in an oblique plane such as to identify a pointed end 98A in the electrode 98; as can be seen from the figure, the pointed end extends beyond the corresponding end of the sleeve 97; in this way a free zone Z is created between the pointed end and the head 95A of the bulb.

The bulb 95 and the electrode 98 are connected, by means of conductors 99A, 99B, to the pulse generator 90, the pulse generator 90, as already mentioned, being controlled and managed by the second control board 250.

The electrode 98 is adheringly wound, in the central-lower part thereof, by a second insulating sleeve 102 which in turn is adheringly wound by a tubular protective element 103. The second sleeve 102 isolates the electrode 98 in the part in which it crosses the head of the cylinder.

The protective element is sealedly coupled, in a known way, in the seating in which originally the pre-heating glowplug is inserted.

In a case where the generator 90 is activated (which, as will be clarified in the following, presupposes the deactivation of the resistance 96), generates, between the point 98A and the head 95A of the bulb 95, more precisely in the space Z, an arc S (see figure 3B) the function of which will be clarified in the following.

The functioning of the proposed system is now described.

The engine M is at first stationary, and is started-up with supply of diesel, i.e. by the plant 100.

It follows that the vaporizer 80, the pulse generator 90 and the gas injectors 85 are deactivated.

The first control board 150, on activation of the engine M with diesel supply, powers the electrical resistance 96 of the device 10 (figure 3A) for a predetermined time.

The functioning of the plant 100, controlled and managed by the first control board 150, is of known type.

The switching of the supply of the engine from diesel to gas, is done by the second control board 250, which, in suitable phase relation:
- deactivates the pressure regulator 7 such that it behaves as an open conduit;
- activates the vaporiser 80, the pulse generator 90 and the gas injectors 85.

The deactivating of the pressure regulator 7 causes a significant reduction in pressure in the chamber (rail) 50 which falls to a lower value than the value ensuring functioning of the electro-injectors 10; this situation, detected by the sensor 12 connected to the first control board 150, causes the intervention of the board 150 on the electro-injectors 9 which are not activated.

In this way, a continuous flow of diesel is created in the plant 100, in particular in the first conduit 2, in the chamber (rail) 50 and in the second conduit 8, which flow is regulated by the flow limiter 4 which, in the present situation, is controlled by the second control board 250; the pumps P₁, P₂ function with a limited flow rate, practically "empty" but in a moist environment, the moisture being provided by the gas.

The activation of the vaporizer 80 provides pressurised steam to the gas injectors 85 which, controlled and managed by the second control board 250, inject gas into the manifold C of the cylinders, and from there, via the aspirating valves of the cylinders, the gas is supplied the cylinders.

The activation of the generator 90 enables sending tension pulses to the conductors 99A, 99B which cause a generating of arcs S (figure 3B) between the point of the electrode 98 and the head 95A of the bulb 95; in this situation the device 10 functions as a spark plug.

In the situation just considered, the phases of a start-up cycle are defined in the cylinders of the engine M, i.e. the Otto cycle.

The switching from the gas supply to the diesel supply leads to the intervention of the second control board 250 which in suitable phase relation deactivates the vaporizer 80, the generator 90 and the gas injectors 85, and returns the pressure limiter 7 to the original functions, i.e. limiting the pressure internally of the chamber 50.

The increase in pressure therein is detected by the first control board 150 (by means of the sensor 12) which newly activates the electro-injectors 9; this determines, in the engine cylinders, realisation of a cycle with start-up by compression, i.e. the Diesel cycle.

In a case where the engine M is to be started up with gas supply, it is necessary to activate, in order, the second control board 250 and then the first control board 150; the above-mentioned conditions are re-proposed with a further technical-functional aspect.

The first control boar 150, informed by the sensor 12 of the low pressure value in the chamber 50, not only does not activate the electro-injectors 9; it also does not intervene to supply the resistance R.

The system enables supplying the engine M with a compression-igniting fuel (for example, and preferably diesel) or with a controlled ignition fuel (for example methane, liquid petroleum gas known as LPG, etc.) and switching one to the other simply and rapidly.

The above involves the use of controlled ignition means, having the function of spark plugs, which in the present case are provided in the device 10 also carrying out the function of pre-heating glowplugs used in start-up of Diesel engines.

To an engine predisposed to function with the Diesel cycle, and therefore provided with the original plant 100, is associated the gas supply plant 200 which exploits some sensors of the original plant (for example the sensors 12, 13) and intervenes on the means and/or devices of the original plant (for example the pressure limiter 7, the flow regulator 4).

The original glowplug has to be replaced with the device conformed such as to engage the seating with which the original glowplug was engaged.

The foregoing has been described by way of example, and any variations of a practical-applicational nature are understood to fall within the protective scope of the invention as claimed in the following.

## Claims

1. A system for supplying an internal combustion engine, comprising:
a first tank (1) containing fuel usable for realising a diesel cycle;
a first conduit (2) for fuel supply emerging from the first tank (1) and ending in a distribution chamber (50) which supplies electro-injectors (9) associated to cylinders of the engine (M), means (P₁, P₂) being comprised in the first conduit (2) for pressurised supply of the fuel to the distribution chamber (50), and being comprised regulating means (4) of a fuel flow through the first conduit (2);
a second conduit (8) for fuel recirculation originating from a pressure limiter (7) associated to the distribution chamber (50) and ending into the first tank (1), the exhaust channels (9A) of the electro-injectors (9) being connected to the second conduit (8);
a first control board (150) to which at least sensors 11, 12, 13 are connected, for detecting the temperature of the fuel in the first conduit (2), the fuel pressure in the chamber (50) and the speed of the drive shaft of the engine (M), the first control board (150) being for controlling and managing at least the electro-injectors (9) and the regulating means (4) and pressure limiter (7), and first electrical means (96) destined to pre-heat, on start-up of the engine (M) and for a predetermined time, the portion of the cylinders affected by the electro-injectors (9);
wherein it comprises:
a second tank (70) containing fuel in the liquid state;
a vaporiser (80), supplied by the second tank (70), for supplying the fuel, in a gaseous state, to electrically-controlled gas injectors (85), the gas injectors (85) opening into the aspirating manifold (C) of the cylinders of the engine (M); a tension pulse generator (90) with the connection actuated in phase relation with the unpowering of the heating means (96) actuated by the first control board (150);
second electrical means, arranged in the cylinders of the engine (M) at the related cylinder head and destined, if supplied by the generator (90), to create electric arcs (S);
a second control board (250) to which the pressure sensor (12,13) of the distribution chamber (50) and the sensor of the number of revolutions of the engine (M) are connected, which second control board (250) is destined to intervene, in suitable phase relation, on the regulating means (4) and pressure limiter (7) so as to deactivate the electro-injectors (9) and control and manage the vaporiser (80), gas injectors (85), tension pulse generator (90), and second electrical means, for realising supply to the cylinders of the engine (M) with the fuel in gaseous state, such as to define an Otto cycle.

2. The system of claim 1, **characterised in that** the first and second electrical means are provided in a device (10) arranged internally of the cylinder head of a related cylinder, the device comprising:
a bulb (95), constituted by a conductor material, internally of which heating means (96) are located in proximity of the related head (95A), which heating means (96) are connectable to the first control board (150);
a first insulating sleeve (97) adheringly enveloping the bulb (95);
a tubular cylindrical electrode (98) adheringly enveloping the first insulating sleeve (97), an portion of the tubular cylindrical electrode (98) adjacent to the head (95A) of the bulb (95) forming a pointed end (98A) developing beyond a corresponding end of the first insulating sleeve (97);
means (99A), (99B) for electrically connecting the bulb (95) and electrode (98) to the tension pulse generator (90);
a second insulating sleeve (102) adheringly enveloping at least the portion of the electrode (90) crossing the head of the related cylinder.

3. The system of claim 2, **characterised in that** it comprises a tubular protection element (103) which adheringly envelops the second insulating sleeve (102).

## Patentansprüche

1. Zufuhrsystem für einen Verbrennungsmotor, Folgendes beinhaltend:
einen ersten Tank (1) zur Aufnahme des für die Ausführung eines Diesel-Kreisprozesses verwendbaren Kraftstoffs;
eine erste Leitung (2) für die Kraftstoffzuführung, die aus dem ersten Tank (1) entspringt und in eine Verteilerkammer (50) mündet, zur Versorgung von Elektroinjektoren (9), die Zylindern des Motors (M) zugeordnet sind, wobei die erste Leitung (2) Mittel (P₁, P₂) für die unter Druck erfolgende Zuführung des Kraftstoffes zu der Verteilerkammer (50) beinhaltet und ferner Mittel (4) zur Regulierung der Kraftstofffördermenge durch die erste Leitung (2) beinhaltet;
eine zweite Leitung (8) für den Kraftstoffrücklauf, die von einem Druckbegrenzer (7), der mit der Verteilerkammer (50) verbunden ist, entspringt und in den ersten Tank (1) mündet, wobei die Auslasskanäle (9A) der Elektroinjektoren (9) mit der zweiten Leitung (8) verbunden sind;
eine erste Steuereinrichtung (150) mit der zumindest Sensoren (11, 12, 13) verbunden sind, die dazu dienen, die Temperatur des Kraftstoffs in der ersten Leitung (2), den Kraftstoffdruck in der Kammer (50) und die Drehzahl der Antriebswelle des Motors (M) zu erfassen, wobei die erste Steuereinrichtung (150) dafür bestimmt ist, zumindest die Elektroinjektoren (9), die Reguliereinrichtungen (4), den Druckbegrenzer (7) sowie erste elektrische Mittel (96) zu überwachen und zu steuern, die dafür bestimmt sind, beim Anlaufen des Motors (M) und für eine vorbestimmte Zeitdauer, den Abschnitt der Zylinder vorzuwärmen, der von den Elektroinjektoren (9) betroffen ist;
wobei das System Folgendes beinhaltet:
eine zweiten Tank (70), der Kraftstoff im flüssigen Zustand enthält;
einen Verdampfer (80), der von dem zweiten Tank (70) gespeist wird, um den Kraftstoff im gasförmigen Zustand elektrisch gesteuerten Gasinjektoren (85) zuzuführen, wobei diese Gasinjektoren (85) in den Ansaugkrümmer (C) der Zylinder des Motors (M) münden;
einen Spannungsimpulsgenerator (90), wobei die Herstellung der Verbindung in Phasenbeziehung mit dem von der ersten Steuereinrichtung (150) vorgenommenen Abschalten der Versorgung der Heizmittel (96) erfolgt;
zweite elektrische Mittel, die in den Zylindern des Motors (M) an dem zugehörigen Zylinderkopf angeordnet und dafür bestimmt sind, wenn sie durch den Generator (90) gespeist werden, Lichtbögen (S) zu erzeugen;
eine zweite Steuereinrichtung (250), an die der Drucksensor (12) der Verteilerkammer (50) und der Sensor (13) für die Umdrehungszahl des Motors (M) angeschlossen sind, wobei diese zweite Steuereinrichtung (250) dafür bestimmt ist, in geeigneter Phasenbeziehung auf die Reguliereinrichtungen (4) und den Druckbegrenzer (7) einzuwirken, um die Elektroinjektoren (9) zu deaktivieren und den Verdampfer (80), die Gasinjektoren (85), den Spannungsimpulsgenerator (90) und die zweiten elektrische Mittel so zu überwachen und zu steuern, dass den Zylindern des Motors (M) der Kraftstoff im gasförmigen Zustand zugeführt wird, um einen Otto-Kreisprozess zu erzeugen.

2. System nach Anspruch 1, **dadurch gekennzeichnet, dass** die ersten und zweiten elektrischen Mittel in einer Vorrichtung (10) bereitgestellt werden, die innerhalb des Zylinderkopfs eines zugehörigen Zylinders angeordnet ist, wobei die Vorrichtung Folgendes beinhaltet:
einen Röhrenkolben (95), der aus einem Leitermaterial besteht, in dessen Innern Heizmittel (96) in der Nähe des betreffenden Kopfes (95A) angeordnet sind, wobei diese Heizmittel (96) mit der ersten Steuereinrichtung (150) verbunden werden können;
eine erste Isolierhülse (97), die den Röhrenkolben (95) anliegend umhüllt;
eine röhrenförmige zylindrische Elektrode (98), welche die erste Isolierhülse (97) anliegend umhüllt, wobei ein Abschnitt der röhrenförmigen zylindrischen Elektrode (98), der an den Kopf (95A) des Röhrenkolbens (95) angrenzt., ein spitz zulaufendes Ende (98A) bildet, das sich über ein entsprechendes Ende der ersten Isolierhülse (97) hinaus erstreckt;
Mittel (99A), (99B) zur elektrischen Verbindung des Röhrenkolbens (95) und der Elektrode (98) mit dem Spannungsimpulsgenerator (90);
eine zweite Isolierhülse (102), welche zumindest den Abschnitt der Elektrode (98) anliegend umhüllt, der den Kopf des betreffenden Zylinders durchquert.

3. System nach Anspruch 2, **dadurch gekennzeichnet, dass** es ein röhrenförmiges Schutzelement (103) beinhaltet, das die zweite Isolierhülse (102) anliegend umhüllt.

## Revendications

1. Un système d'alimentation d'un moteur à combustion interne, comprenant:
un premier réservoir (1) contenant du carburant utilisable pour réaliser un cycle diesel;
un premier conduit (2) pour l'alimentation du carburant sortant du premier réservoir (1) et débouchant dans une chambre de distribution (50) qui alimente des électro-injecteurs (9) associés aux cylindres du moteur (M), des moyens (P₁, P₂) étant prévus dans le premier conduit (2) pour l'alimentation sous pression du carburant vers la chambre de distribution (50), et des moyens (4) de régulation du débit de carburant à travers le premier conduit (2) étant prévus ;
un deuxième conduit (8) pour la recirculation du carburant partant d'un limiteur de pression (7) associé à la chambre de distribution (50) et débouchant dans le premier réservoir (1), les canaux d'échappement (9A) des électro-injecteurs (9) étant reliés au deuxième conduit (8) ;
une première unité de contrôle (150) à laquelle sont reliés au moins des capteurs (11, 12, 13), pour détecter la température du carburant dans le premier conduit (2), la pression du carburant dans la chambre (50) et la vitesse de l'arbre de transmission du moteur (M), la première unité de contrôle (150) étant destinée à contrôler et à gérer au moins les électro-injecteurs (9) et les moyens de régulation (4) et le limiteur de pression (7), et des premiers moyens électriques (96) destinés à préchauffer, au démarrage du moteur (M) et pendant un temps prédéfini, la portion des cylindres concernée par les électro-injecteurs (9) ;
où il comprend :
un deuxième réservoir (70) contenant du carburant à l'état liquide;
un vaporiseur (80), alimenté par le deuxième réservoir (70), pour alimenter le carburant, à l'état gazeux, à des injecteurs à gaz (85) à commande électrique, les injecteurs à gaz (85) débouchant dans le collecteur d'aspiration (C) des cylindres du moteur (M) ;
un générateur d'impulsions de tension (90) avec la connexion mise en oeuvre en relation de phase avec la coupure de l'alimentation aux moyens de chauffage (96) mise en oeuvre par la première unité de contrôle (150) ;
des deuxièmes moyens électriques, disposés dans les cylindres du moteur (M) au niveau de la culasse respective et destinés, si alimentés par le générateur (90), à créer des arcs électriques (S) ;
une deuxième unité de contrôle (250) à laquelle sont reliés le capteur de pression (12) de la chambre de distribution (50) et le capteur (13) du nombre de tours du moteur (M), ladite deuxième unité de contrôle (250) est destinée à intervenir, en relation de phase adéquate, sur les moyens de régulation (4) et le limiteur de pression (7) de manière à désactiver les électro-injecteurs (9) et à contrôler et gérer le vaporiseur (80), les injecteurs à gaz (85), le générateur d'impulsions de tension (90), et des deuxièmes moyens électriques, pour réaliser l'alimentation aux cylindres du moteur (M) avec le carburant à l'état gazeux, afin de définir un cycle Otto.

2. Le système selon la revendication 1, **caractérisé en ce que** les premiers et deuxièmes moyens électriques sont munis d'un dispositif (10) disposé à l'intérieur de la culasse d'un cylindre respectif, le dispositif comprenant :
une ampoule (95), constituée d'un matériau conducteur, à l'intérieur de laquelle des moyens chauffants (96) sont placés à proximité de la tête (95A) respective, lesdits moyens chauffants (96) peuvent être reliés à la première unité de contrôle (150) ;
un premier manchon isolant (97) enveloppant de manière adhérente l'ampoule (95) ;
une électrode tubulaire cylindrique (98) enveloppant de manière adhérente le premier manchon isolant (97), une portion de l'électrode tubulaire cylindrique (98) adjacente à la tête (95A) de l'ampoule (95) formant une extrémité pointue (98A) se développant au-delà d'une extrémité correspondante du premier manchon isolant (97) ;
des moyens (99A), (99B) pour relier électriquement l'ampoule (95) et l'électrode (98) au générateur d'impulsions de tension (90) ;
un deuxième manchon isolant (102) enveloppant de manière adhérente au moins la portion de l'électrode (98) traversant la culasse du cylindre correspondant.

3. Le système selon la revendication 2, **caractérisé en ce qu'**il comprend un élément tubulaire de protection (103) qui enveloppe de manière adhérente le deuxième manchon isolant (102).
